# EUROPÄISCHE PATENTSCHRIFT

(11) **EP 3 143 961 B1**
(45) Veröffentlichungstag und Bekanntmachung des Hinweises auf die Patenterteilung: **18.03.2020**
(21) Anmeldenummer: 16191828.9
(22) Anmeldetag: 05.05.2011
(51) Int. Cl.: A61C 8/00

(54) **DENTALIMPLANTAT**
DENTAL IMPLANT
IMPLANT DENTAIRE

(30) Priorität: 05.05.2010 DE 102010019582; 05.05.2010 DE 102010019583
(43) Veröffentlichungstag der Anmeldung: 22.03.2017
(62) Teilanmeldung aus: 11721998.0
(73) Patentinhaber: Zipprich, Holger, 64342 Malchen (DE)
(72) Erfinder: Zipprich, Holger, 64342 Malchen (DE)
(74) Vertreter: Tergau & Walkenhorst Patentanwälte PartGmbB

(56) Entgegenhaltungen:
- WO-A1-98/46162
- WO-A2-2009/121500
- US-A1- 2004 209 226
- US-A1- 2008 261 176

## Beschreibung

Die Erfindung bezieht sich auf ein Dentalimplantat mit einem zur Einbringung in einen Kieferknochen vorgesehenen ersten Implantat-Teil und mit einem diesem zugeordneten, zur Anbringung eines Zahnersatzstücks vorgesehenen zweiten Implantat-Teil, wobei die Implantat-Teile über einen an eines der Implantat-Teile angeformten, in einen im anderen Implantat-Teil vorgesehenen Aufnahmekanal oder eine Formausnehmung einschiebbaren Verbindungszapfen oder Kontaktstift mechanisch miteinander verbindbar sind.

Derartige, so genannte zwei- oder mehrteilige Dentalimplantate sind in vielfältigen Formen bekannt. Sie werden üblicherweise anstelle eines extrahierten oder ausgefallenen Zahnes in den Kieferknochen eingesetzt, um dort nach einer Einheilphase von drei bis vier Monaten ein als Zahnersatz dienendes prothetisches Teil oder eine Krone zu halten. Dazu ist ein derartiges Dentalimplantat üblicherweise als geeignet geformter Metallkörper ausgebildet, wobei das erste, in der Regel auch als Pfostenteil bezeichnete Implantat-Teil üblicherweise durch Einschrauben an der vorgesehen Stelle in den Kieferknochen eingesetzt wird. Das Pfostenteil weist dabei in der Regel am apikalen Ende ein zumeist selbstschneidendes Schraubengewinde auf, mit welchem das Pfostenteil in das entsprechend präparierte Implantatbett eingesetzt wird.

Ein derartiges Dentalimplantat ist üblicherweise grundsätzlich zweiteilig aufgebaut und umfasst das zur Einbringung in den Kieferknochen vorgesehene Pfostenteil und ein zugeordnetes Aufbauteil, an das das als Prothese oder dergleichen vorgesehene Zahnersatzstück anbringbar ist. Das Pfostenteil und ebenso das Kopf- oder Aufbauteil bestehen üblicherweise aus Metall oder einer Keramik, und zwar insbesondere aus Titan, einer Titanlegierung, einer titanhaltigen Legierung, einer Zirkonoxid-Aluminiumoxid-Keramik oder einer Keramik, die entweder Zirkonoxid oder Aluminiumoxid beinhaltet. Das Pfostenteil ist an seiner Außenseite üblicherweise mit einem Gewinde versehen, welches als selbstschneidendes oder auch als nicht selbstschneidendes Gewinde ausgeführt sein kann. Das Pfostenteil wird üblicherweise in einem entsprechend aufbereiteten Implantatbett des Kieferknochens verankert. Die Konstruktion des im Außenbereich des Pfostenteils vorgesehenen Gewindes ist dabei üblicherweise für eine hohe Primärstabilität der Anordnung und eine gleichmäßige Weiterleitung der bei der Kaubelastung des Dentalimplantats auftretenden Kräfte in den Kieferknochen ausgelegt.

Dokument US2008261176 offenbart ein zur Einbringung in einen Kieferknochen vorgesehenen Implantatschraube und mit einem diesem zugeordneten, zur Anbringung eines Zahnersatzstücks vorgesehenen Abutment, wobei das Abutment ein Verbindungszapfen aufweist, der in einen im Implantat vorgesehenen Aufnahmekanal einschiebbar ist. Dabei weisen der Verbindungszapfen und der Aufnahmekanal einem Indizierungsbereich mit jeweils polygonaler zur Längsachse des Implantats geneigter Kontaktflächen auf. Außerdem weist das Implantat eine zweiten Indizierungsbereich in Form eines polygonalen Rotationsgeperres mit in Bezug zur Längsachse des Verbindungszapfens parallelen Flächen auf.

Dokument WO2009121500 offenbart eine zur Einbringung in einen Kieferknochen vorgesehenen Ankerschraube und mit einem diesem zugeordneten, zur Anbringung eines Zahnersatzstücks vorgesehenen Abutment, wobei das Abutment ein Verbindungszapfen aufweist, der in einen im Ankerschraube vorgesehenen Aufnahmekanal einschiebbar ist. Der Verbindungszapfen und der Aufnahmekanal weisen jeweils einem Indizierungsbereich mit einer kegelstumpfartigen polygonalen Kontaktfläche auf. Außerdem weist das Implantat eine zweiten Indizierungsbereich in Form eines polygonalen Rotationsgeperres mit in Bezug zur Längsachse des Verbindungszapfens parallelen Flächen auf.

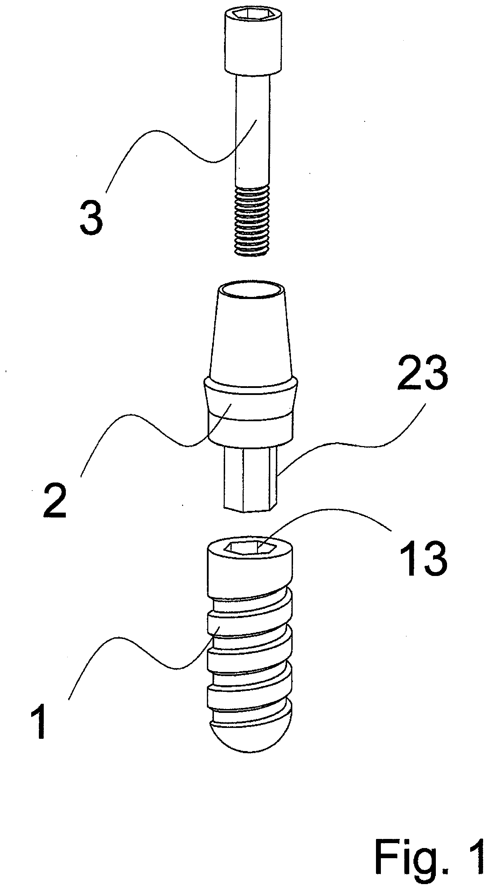

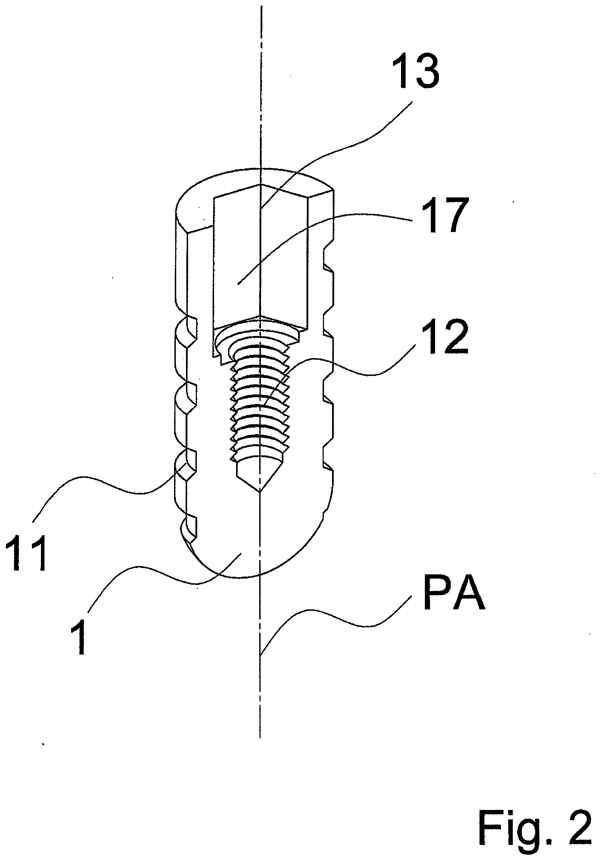

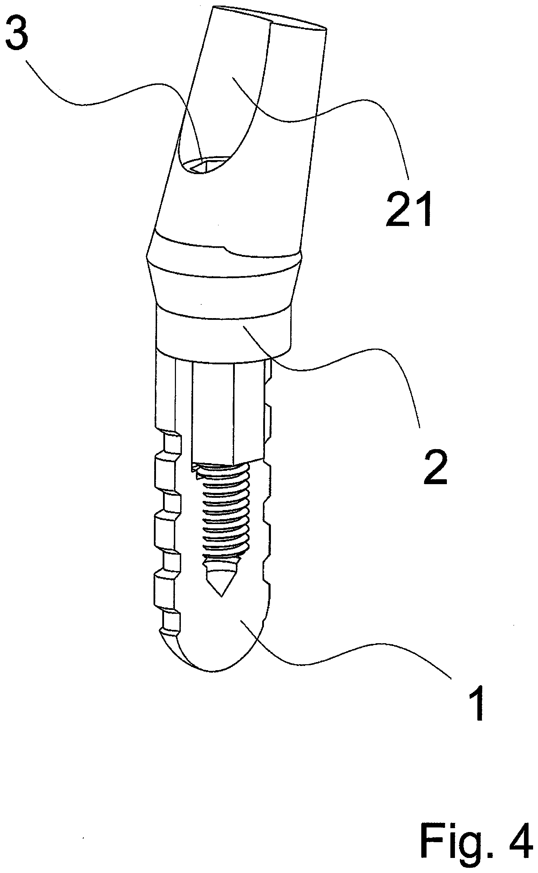

Figuren 1 und 2 zeigen je ein bekanntes Dentalimplantat (Pfostenteil) mit einem dazugehörigen Aufbauteil und einer Verbindungsschraube. In dem Pfostenteil 1 ist eine Formausnehmung 13 eingebracht, welche exakt auf den an das Aufbauteil 2 angeformten Kontaktstift 23 abgestimmt ist. Die Formausnehmung 13 im Pfostenteil 1 bildet im eingegliederten Zustand mit dem an das Aufbauteil 2 angeformten Kontaktstift 23 ein Gesperre gegenüber allen Kräften und Momenten außer gegenüber einer Kraft, welche beide Teile voneinander weg bewegt. Um eine ungewollte Trennung der beiden Bauteile aufgrund einer derartigen Kraft zu vermeiden, wird die Verbindungsschraube 3 (vgl. Figur 4) mit dem entsprechenden Anzugsmoment montiert.

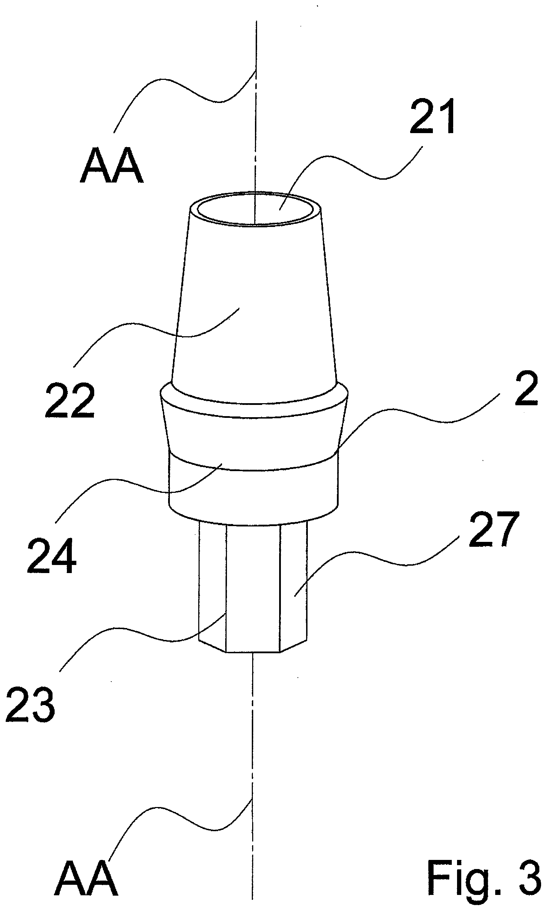

Figur 3 zeigt ein bekanntes Aufbauteil 2 mit einem in Form eines Sechskants angeformten Kontaktstift 23. Dieser Kontaktstift 17 weist sechs Funktionsflächen 27 auf, welche parallel zur Längsachse AA des Aufbauteils ausgerichtet sind. Der für den Durchtritt durch die Schleimhaut vorgesehene Bereich ist mit 24 gekennzeichnet. In Richtung okklusal ist eine Bohrung vorgesehen, durch welche die Verbindungsschraube 3 aus Fig. 1 durchgesteckt werden kann. An die Fläche 22 kann ein Zahnersatzstück angebracht werden und z.B. durch Kleben befestigt werden.
Figur 4 zeigt ein bekanntes mit einer Verbindungsschraube 3 auf einem Pfostenteil 1 montiertes Aufbauteil 2, wobei das Pfostenteil 1 zur besseren Darstellung im Schnittbild gezeigt wird.

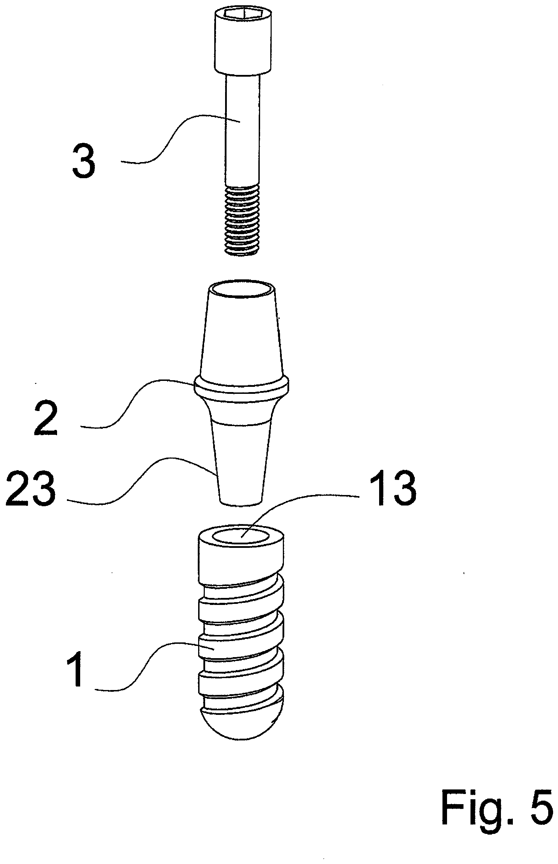

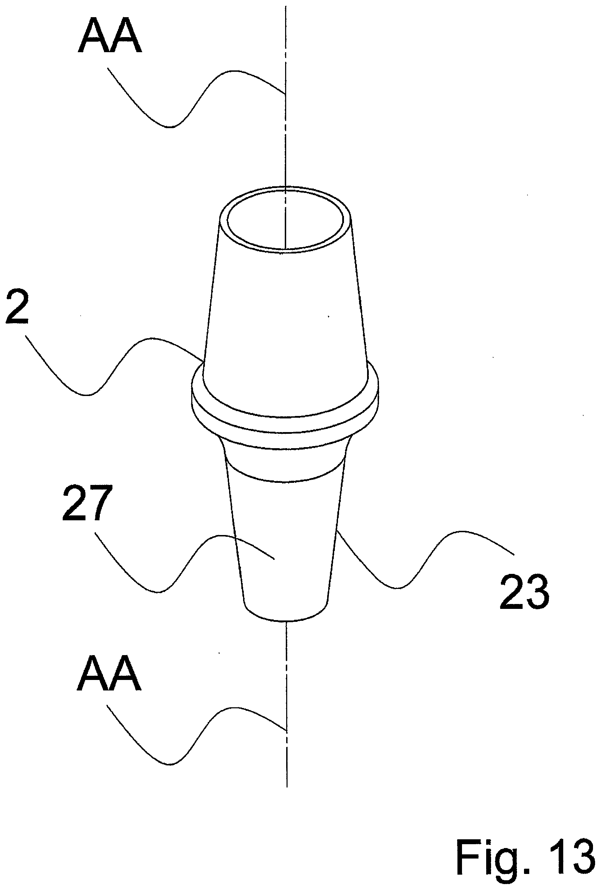

Figur 5 zeigt ein bekanntes Aufbauteil 1 mit einer konisch runden Formausnehmung 13, ein Aufbauteil 2 mit einem konisch runden und angeformten Kontaktstift 23 und eine dazugehörige Verbindungsschraube 3. Der konisch runde Kontaktstift 23 ist auf die konisch runde Formausnehmung 13 abgestimmt. In dieser Ausführung besteht kein rotatorisches Gesperre zwischen dem Aufbauteil und dem Pfostenteil. Eine Rotation zwischen den bei den Bauteilen wird lediglich durch eine Hemmung zwischen den beiden Bauteilen vermieden. Figur 13 zeigt das Aufbauteil 2 aus Figur 5, wobei erkennbar ist, dass der Kontaktstift 23 konisch ausgeführt ist. Die Funktionsfläche 27 hat keine Elemente, die als rotatori sches Gesperre fungieren. Die Funktionsfläche 27 ist konisch und ist somit zur Aufbau teilachse AA geneigt. Die Querschnittsfläche des Kontaktstifts 23 ist rund ausgeführt. Weiterhin bekannt sind auch konisch runde Verbindungen zwischen einem Pfostenteil und einem Aufbauteil, wobei in Richtung apikal an den konisch runden Kontaktstift des Aufbauteils ein zweiter Kontaktstift angeformt. Dieser bildet mit einer zweiten Formausnehmung im Pfostenteil, welche apikal der konisch runden Formausnehmung im Pfosten teil eingebracht ist, ein rotatorisches Gesperre.

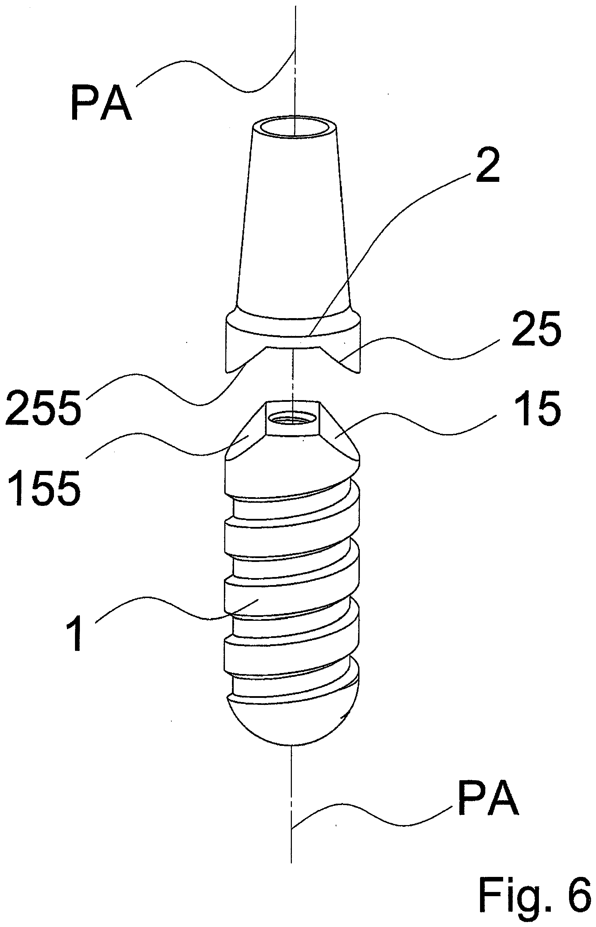

Es gibt bekannten Verbindungstypen bei denen die Indizierung bzw. das rotatorische Gesperre nicht parallelwandig ausgeführt ist. Fig. 6 zeigt eine Verbindung bei welcher an dem Pfostenteil 1 zwei Giebeldachartige Funktionsflächen 15 und 155 angebracht sind, welche auf die am Aufbauteil 2 angebrachten Funktionsflächen 25 und 255 abgestimmt sind. Diese Flächen sind nicht parallel zur Pfostenteilachse PA und sind somit zu der Pfostenteilachse PA geneigt. Das Aufbauteil und das Pfostenteil bilden aufgrund der zur Pfostenteilachse geneigten Funktionsflächen nur mit montierter Verbindungsschraube ein rotatorisches Gesperre. Ist die Verbindungsschraube nicht montiert und liegen die Funktionsflächen des Aufbau teil an denen des Pfostenteils an und es ergibt sich zwischen den Bauteilen ein Moment, werden diese sich gegeneinander verdrehen und voneinander weg bewegen.

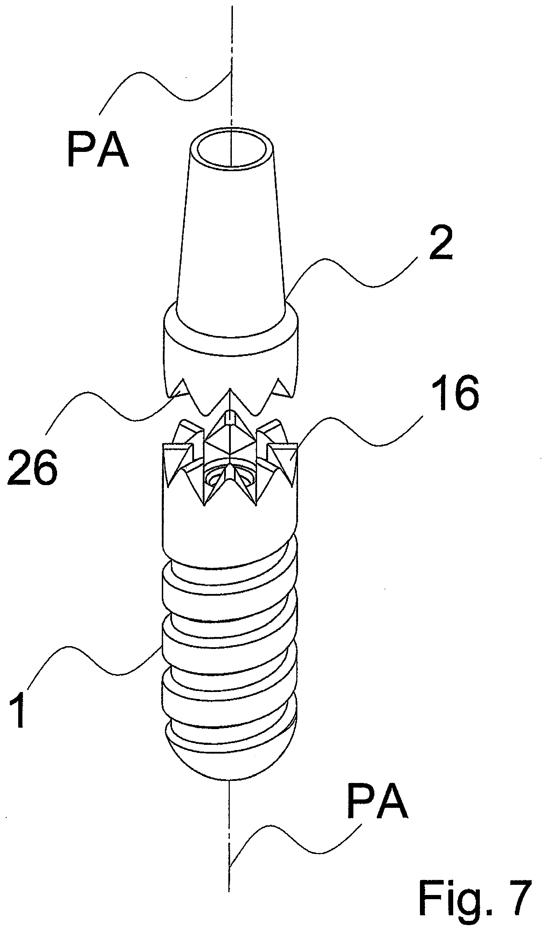

Figur 7 zeigt eine bekannte Art Verzahnung welche als Indizierung und als Rotationsgesperre genutzt werden kann. Die Funktionsflächen 16 und 26 sind nicht parallel zur Pfostenteilachse PA und sind somit zu der Pfostenteilachse PA geneigt. Das Aufbauteil und das Pfostenteil bilden aufgrund der zur Pfostenteilachse geneigten Funktionsflächen nur mit montierter Verbindungsschraube ein rotatorisches Gesperre. Ist die Verbindungsschraube nicht montiert und liegen die Funktionsflächen des Aufbauteil an denen des Pfostenteils an und es ergibt sich zwischen den Bauteilen ein Moment, werden diese sich gegeneinander verdrehen und voneinander weg bewegen.

Dentale Implantate (Pfostenteile) haben üblicherweise äußerlich ein Gewinde (siehe Figuren 1 und 2). Grund hierfür ist, dass Pfostenteile meistens in den Kieferknochen eingeschraubt werden. Das Einschrauben der Pfostenteile erfolgt entweder über ein für diesen Zweck vormontiertes Aufbauteil (Eindrehaufbauteil) oder ein Instrument, welches direkt in das Pfostenteil eingreift. Das bedeutet, dass die Pfostenteile in ihrer Verpackung entweder mit oder ohne ein vormontiertes Eindrehaufbauteil gelagert sind. Der Eindrehvorgang selbst erfolgt entweder manuell oder über eine Maschine, welche das benötigte Drehmoment und die gewünschte Drehzahl bereitstellt. Zur Übertragung des Drehmomentes vom Eindrehinstrument oder dem Eindreh-Aufbauteil auf das Pfostenteil wird meist ein Gehemme und oder ein Gesperre zwischen den Bauteilen genutzt. Bei der Verwendung eines Gesperres wird das Gesperre auch später als Indizierung verwendet. Dies hat den Vorteil, dass ein und dasselbe geometrische Teil, hier ein Gesperre, für mehrere Anwendungen verwendet werden kann.

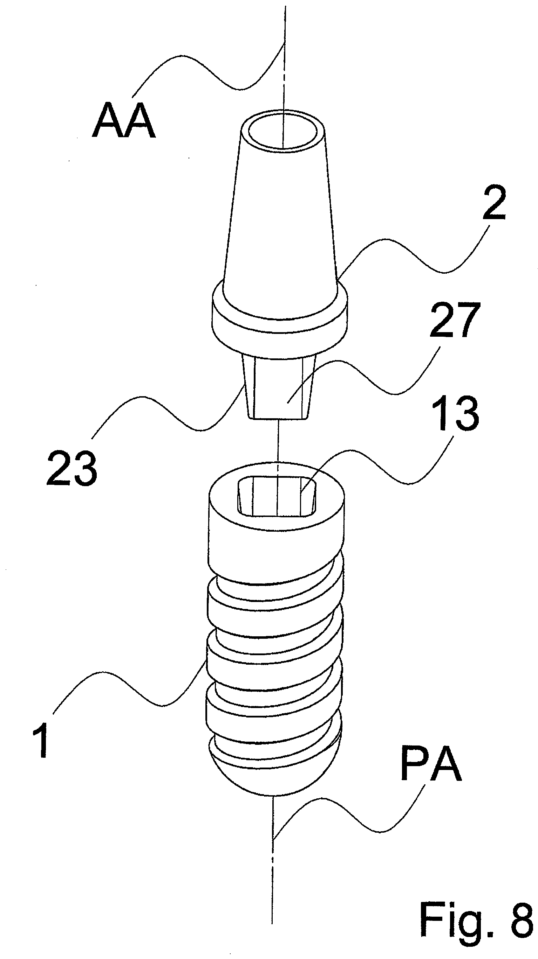

KR-A-10 2007 009 060 beschreibt und Figur 8 zeigt eine Konusverbindung wobei die Querschnittsfläche nicht rund ist, sondern ein Quadrat mit abgerundeten Ecken aufweist. Die Funktionsflächen 17 und 27 sind nicht parallel zur Pfostenteilachse PA und sind somit zu der Pfostenteilachse PA geneigt. Das Aufbauteil und das Pfostenteil bilden aufgrund der zur Pfostenteilachse geneigten Funktionsflächen nur mit montierter Verbindungsschraube ein rotatorisches Gesperre. Ist die Verbindungsschraube nicht montiert und liegen die Funktionsflächen des Aufbauteil an denen des Pfostenteils an und es ergibt sich zwischen den Bauteilen ein Moment, werden diese sich gegeneinander verdrehen und voneinander weg bewegen.

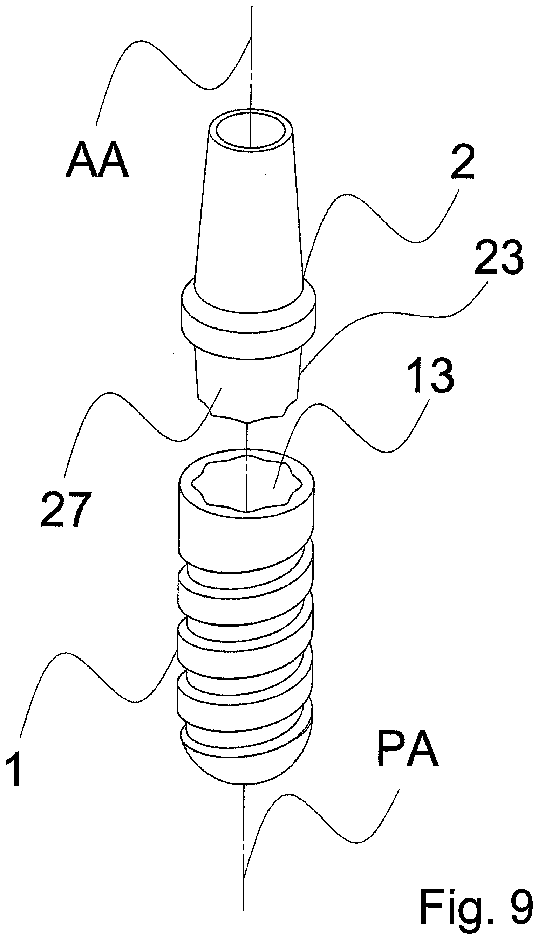

US-A-2005 186 537 beschreibt und Figur 9 zeigt eine Konusverbindung, wobei die Querschnittsfläche nicht rund ist sondern konkave und konvexe Anteile beinhaltet. Die Funktionsflächen 17 und 27 sind nicht parallel zur Pfostenteilachse PA und sind somit zu der Pfostenteilachse PA geneigt. Das Aufbauteil und das Pfostenteil bilden aufgrund der zur Pfostenteilachse geneigten Funktionsflächen nur mit montierter Verbindungsschraube ein rotatorisches Gesperre. Ist die Verbindungsschraube nicht montiert und liegen die Funktionsflächen des Aufbauteil an denen des Pfostenteils an und es ergibt sich zwischen den Bauteilen ein Moment, werden diese sich gegeneinander verdrehen und voneinander weg bewegen.

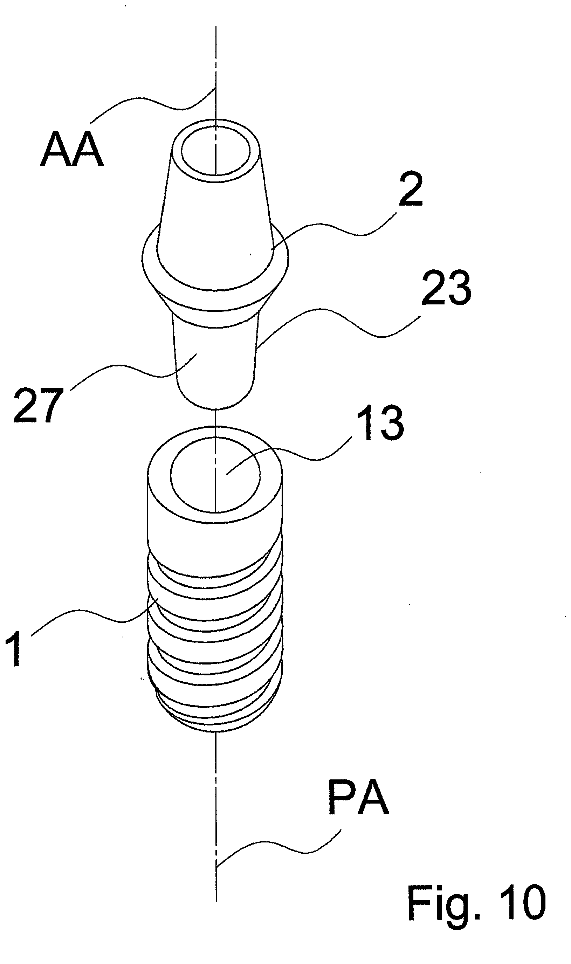

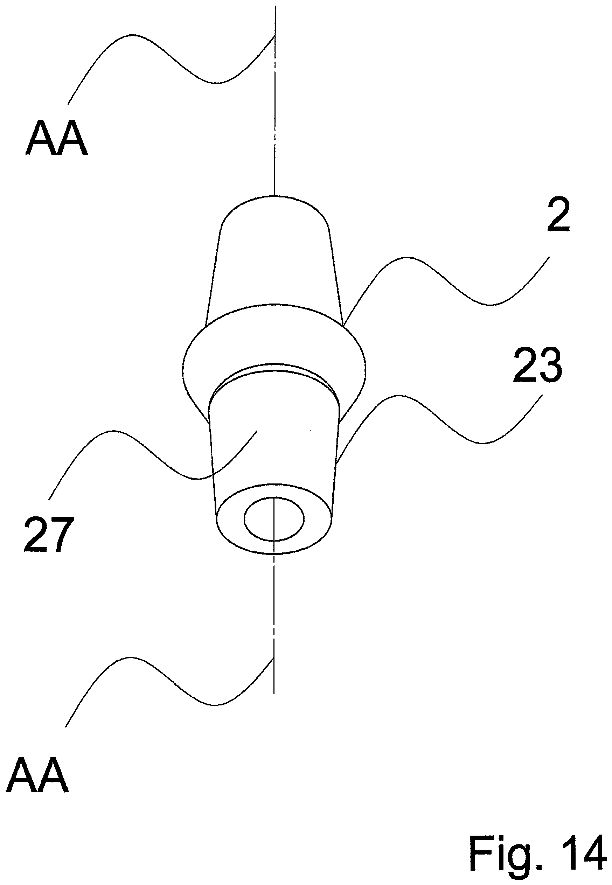

Figur 10 zeigt ein nicht erfindungsgemäßes Pfostenteil 1 mit einer ovalen / elliptischen Formausnehmung 13 und ein Aufbauteil 2 bei welchem die Querschnittsfläche des an das Aufbauteil 2 angeformten Kontaktstifts 23 nicht rund sondern oval gestaltet ist. Figur 14 zeigt ein solches Aufbauteil und es wird erkennbar, dass die Querschnittsfläche des Kontaktstifts 23 oval / elliptisch ist und dass die dazugehörige Funktionsfläche 27 konisch ist und somit zu Aufbauteilachse AA geneigt ist. Zur Erläuterung von ovalen Konusverbindungen zwischen einem Pfosten teil und einem Aufbauteil wird auf die Druckschriften DE 102008054138.9 und PCT/EP 2009/007702 verwiesen.

Die Gemeinsamkeit der Verbindungstypen zwischen Aufbauteil und Pfostenteil der Fig. 6 bis Fig. 10 und der in den Druckschriften DE 102008054138.9 und PCT/EP 2009/007702 erläuterten ovalen Konusverbindungen liegt in der Gegebenheit, dass die Geometrien welche das Rotationsgeperre zwischen Aufbauteil und Pfostenteil bilden nicht parallel wandig sind bzw. keine Funktionsfläche zu der Pfostenteilachse und oder der Aufbauteil achse parallel ist sondern die Funktionsfläche / Funktionsflächen entweder zur Pfosten teilachse und zur Aufbauteilachse geneigt sind und oder konisch ausgeführt sind.

Diese konischen Anteile des Rotationsgesperres bzw. diese konischen Rotationsgesperre sind streng genommen keine reinen Rotationsgesperre mehr. Ursache hierfür ist die Gegebenheit, dass bei der Übertragung eines Momentes welches an dem Aufbauteil anliegt und um dessen Achse gerichtet ist, an das Pfostenteil kein reines Moment weiterleitet. Zwischen dem Aufbauteil und dem Pfostenteil wirken ein Drehmoment und eine Kraft, welche so gerichtet ist dass sich das Aufbauteil und das Pfostenteil voneinander abstoßen. Die Höhe dieser Kraft ist abhängig von der Geometrie der Verbindung und den Haft- und Gleitreibungseigenschaften der Verbindungspartner an den gegenseitigen Kontaktstellen. Befindet sich die Verbindung zwischen dem Pfostenteil und dem Aufbauteil im endgültig montierten Zustand, also mit montierter Verbindungsschraube wirkt sich dieser Effekt in Abhängigkeit der geometrischen Gestaltung kaum aus. Je geringer der Konuswinkel und je höher die Haft- und Gleitreibung umso geringer die Kraft welche die Bauteile auseinanderdrückt. Je größer der Konuswinkel und je geringer die Haft- und Gleitreibung desto größer der Anteil der der Kraft welche die Bauteile auseinanderdrückt.

Diese Abstoßung hat bezogen auf den praktischen Einsatz von Dentalimplantaten verschiedene Einflüsse. Die Insertion eines Pfostenteils in den Knochen erfolgt über eine Rotation weil die Außengeometrie der Pfostenteile üblicherweise ein Gewinde aufweist über welches das Pfostenteil im Knochen verankert wird. Das Eindrehen des Pfostenteils erfolgt über ein Eindrehwerkzeug. Dieses Werkzeug greift entweder direkt in das Rotationsgesperre / die Indizierung zu Übertragung des nötigen Drehmomentes oder über einen auf dem Pfostenteil vormontierten Eindrehaufbauteil. Dieses Eindrehaufbauteil ist meist mittels einer Verbindungsschraube auf dem Pfostenteil befestigt und nutzt die Indizierung als Rotationsgesperre zur Übertragung des zum Eindrehen nötigen Drehmomentes. In Richtung des Eindrehwerkzeuges befindet sich meist ein weiteres Rotationsgesperre. Handelt es sich bei der Verbindung zwischen dem Pfostenteil und dem Aufbauteil eines Dentalimplantat um ein Rotationsgesperre mit konischen Anteilen kann mit Hilfe eines mittels einer Verbindungsschraube vormontierten Eindrehaufbauteils mit einer problemlosen Insertion des Pfostenteils gerechnet werden. Da diese Eindrehaufbauteile und die dazugehörigen Verbindungsschrauben nach der Insertion des Pfostenteils im Knochen demontiert werden und anschließend nicht weiter verwendbar sind kommt es zu zusätzlichen Kosten und überflüssigen Demontagen. Kann mit dem Eindrehwerkzeug direkt in das Pfostenteil eingegriffen werden, können Kosten für den Patienten und Arbeiten an dem Patienten entfallen. Dies stellt einen enormen Vorteil dar, ist aber mit einer Verbindung, welche in der Indizierung konische bzw. geneigte Funktionselemente besitzt schwierig. Je größer die Haft- und die Gleitreibung zwischen den Kontaktflächen von Aufbauteil und Pfostenteil, desto niedriger die abstoßende Kraft und desto niedriger die Gefahr der Komplikation bei dem Eindrehen des Postenteils in den Knochen mit der Verwendung eines direkt in das Pfostenteil eingreifenden Eindrehwerkzeuges welches über eine konische Indizierung eingreift.

Die Gestaltung der Verbindung zwischen dem Aufbauteil und dem Pfostenteil eines Dentalimplantates wie sie in Fig. 6 bis Fig. 10 dargestellt sind, weisen allerdings auch deutliche Vorteile auf. Bei der Montage von einem Aufbauteil in einem Pfostenteil mit einer rein parallelwandigen Indizierung (Rotationsgesperre ohne konische Funktionsgeometrien und bei der Übertragung von Momenten um deren Achse reine Momentweiterleitung ohne entstehen einer abstoßenden Kraft) muss vor der translatorischen Eingliederung die exakte Position zwischen dem Aufbauteil und dem Pfostenteil gegeben sein. Bei Verbindungen wie sie auf den Figuren 6 bis 10 dargestellt sind kann der Umwandlungseffekt von einem reinen Moment in die Übereinanderlagerung eines Moments und einer Kraft auch umgekehrt genutzt werden. Beim eingliedern des Aufbauteils in das Pfostenteil ist es nicht notwendig das die Indizierung zwischen dem Aufbauteil und dem Pfostenteil exakt zueinander ausgerichtet sind. Stimmt die Position nicht exakt überein kann aus der aufeinander zu Bewegung (rein translatorisch) eine überlagerte Rotation erzwungen werden. Treten die Flächen der Indizierung von Aufbauteil und Pfostenteil zueinander in Kontakt und sind aber rotatorisch nicht zueinander Ausgerichtet wird die translatorische Bewegung in einer translatorische und eine rotatorische Bewegung umgewandelt. Folglich kommt es beim Fügen zu einer rotatorischen Ausrichtung bzw. einer rotatorischen Selbstzentrierung des Aufbauteils im Pfostenteil. Dieser Effekt vereinfacht die Findung der Indizierung und somit die Eingliederung des Aufbauteils in oder auf dem Pfostenteil. Wichtig ist bei der rotatorischen Selbstzentrierung, dass das Aufbauteil nicht an der Rotation behindert wird. Soll die rotatorische Selbstzentrierung mit dem Eindrehen der Verbindungsschraube genutzt werden besteht die Möglichkeit dass das Aufbauteil für die Endposition selbstständig rechtsdrehend oder selbstständig linksdrehend zentriert werden muss. Erfolgt die selbstständige Zentrierung in Drehrichtung der Schraube unterstützt diese den selbst zentrierenden Effekt. Erfolgt die selbstständige Zentrierung entgegen der Drehrichtung der Schraube wirkt diese dem selbst zentrierenden Effekt entgegen. Auch die Dimensionierung von Konuswinkel, Materialpaarung von Aufbauteil und Pfostenteil und die Oberflächenbeschaffenheit nehmen einen großen Einfluss auf die Güte der Selbstzentrierung. Es ist besonders vorteilhaft wenn die Haft- und die Gleitreibung zwischen den Kontaktflächen der konischen Indizierung zwischen dem Aufbauteil und dem Pfostenteil möglichst niedrig sind.

Versuche bei konisch selbst zentrierenden Indizierungen haben gezeigt, dass je niedriger der Konuswinkel ist, desto größer die Möglichkeit einer konischen Selbsthemmung zwischen dem Aufbauteil und dem Pfostenteil. Diese Selbsthemmung ist zwar erwünscht aber erst in der Endposition des Aufbauteils im oder auf dem Pfostenteil. Kommt es vor der rotatorischen Endposition zu einer Hemmung zwischen den beiden Bauteilen, z.B. durch die Tatsache, dass sich das Aufbauteil entgegen der Drehrichtung der Verbindungsschraube selbst zentrieren müsste, wird die mit der Selbstzentrierung gewünschte Vereinfachung nicht erreicht. Es zeigte sich zwar dass im Gegensatz zu herkömmlichen Indizierungen die fehlerhaft montiert wurden, sich die Hemmung durch ein Wackeln am Aufbauteil löst, somit schnell bemerkt wird und das sich anschließend das Aufbauteil weiter zentriert, jedoch ist dies noch nicht zufrieden stellend ausgeführt.

Verbindungen wie sie auf den Figuren 6 bis 10 dargestellt sind besitzen eine rotatorische Selbstzentrierung. Das bedeutet, dass bei dem Eingliedern bzw. Fügen bzw. Aufeinandersetzen von Aufbauteil und Pfostenteil, zwar nicht in allen rotatorischen Positionen, aber häufig axialkraftunterstützt eine rotatorische Bewegung erzwungen wird bzw. ein Drehmoment hervorgerufen wird. Hierbei hat, ähnlich wie bei diversen Getrieben eine rein translatorische Bewegung eine rotatorische Bewegung zur Folge. Dies wird im Folgenden als rotatorische Selbstzentrierung bezeichnet. Im Umgekehrten Fall ist es allerdings so, dass im Montierten Zustand ein Drehmoment welches auf die montierten Bauteile wirkt auch eine Axialkraft zur Folge hat. Die rotatorische Selbstzentrierung vereinfacht das Eingliedern eines Aufbauteils in ein Pfostenteil sehr. Diese Vereinfachung kann von dem Zahntechniker bei dem Eingliedern des Aufbauteils in das im Gipsmodel (Positivsituation des Patientenmundes) integrierte Pfostenteilanalog bei der Herstellung des individuellen Zahnersatzes genutzt werden. Eine weitere Vereinfachung entsteht bei der Eingliederung des Aufbauteils im Pfostenteil des Patientenmundes.

Die Ausführung und Gestaltung der Verbindungsparameter (z.B. Dachwinkel, Konuswinkel, Exzentrizität bei ovalen Konusverbindungen, Durchmesserunterschiede, lokale Maxima und lokale Minima, etc.) hat einen großen Einfluss auf die Qualität der Selbstzentrierung. Über diese Parameter lassen sich die Übersetzungsverhältnisse der Umwandlung von einer translatorischen in eine rotatorische oder umgekehrte Bewegung einstellen bzw. definieren. Wie bei Getrieben nimmt die Reibung zwischen den Kontaktflächen der beweglichen Partner hier das Aufbauteils und das Pfostenteils einen großen Einfluss auf die Leichtgängigkeit. Es besteht die Gefahr, dass sich bei zu großer Reibung zwischen dem Aufbauteil, dem Pfostenteil und oder der Verbindungsschraube das Aufbauteil mit dem Postenteil verklemmen oder durch weiter ansteigende Axialkraft über eine Hemmung keine Rotation zwischen dem Aufbauteil und dem Postenteil ergibt. Die Reibung zwischen den Kontaktstellen des Aufbauteils und des Pfostenteils hat somit einen großen Einfluss auf die Leichtgängigkeit und Zuverlässigkeit der Selbstzentrierung. Weiterhin hat auch die Reibung der Verbindungsschraube zu dem Pfostenteil (über das Gewinde) aber insbesondere die Reibung zwischen der Verbindungsschraube und dem Aufbauteil (über den Schraubensitz) einen großen Einfluss auf die Leichtgängigkeit der rotatorischen Selbstzentrierung.

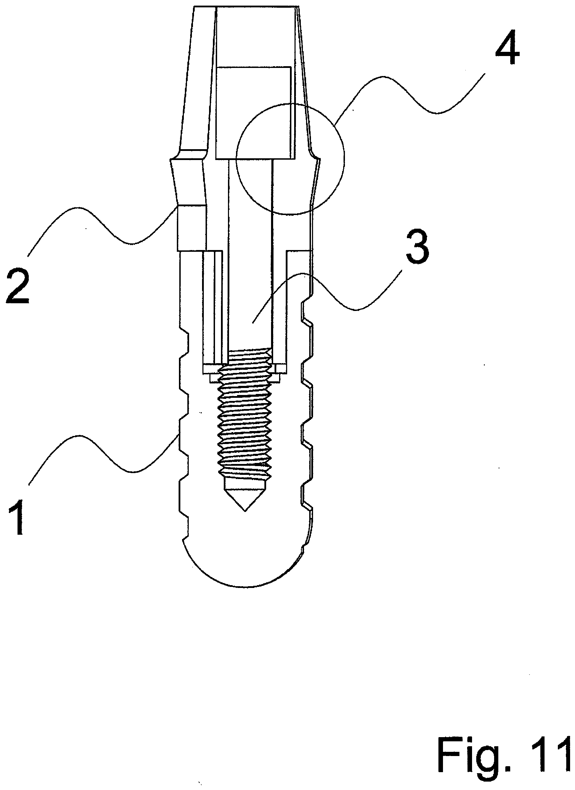

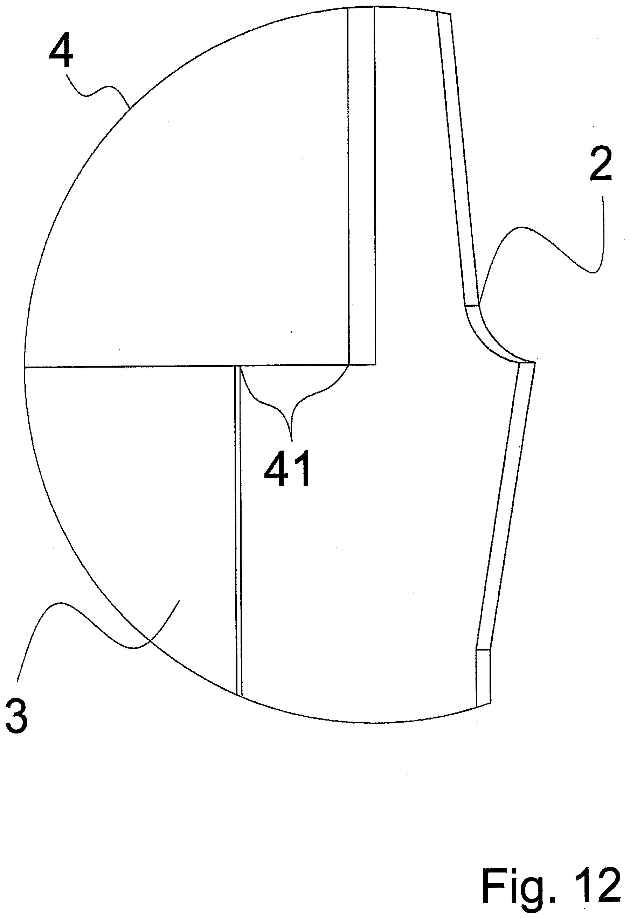

Figur 11 zeigt ein im Schnittbild dargestelltes nicht erfindungsgemäßes Pfostenteil 1 mit einem über die Verbindungsschraube 3 monierten und im Teilschnitt dargestellten Aufbauteil 2. der mit 4 gekennzeichnete Bereich zeigt den Schraubensitz im Aufbauteil 2. Figur 12 zeigt die Vergrößerung des mit 4 in Figur 11 gekennzeichneten Bereichs. der Schraubensitz 41 bildet die Kontaktfläche zwischen dem Aufbauteil 2 und der Verbindungsschraube 3. Diese Kontaktfläche (Schraubensitz) kann wie hier dargestellt plan sein, aber konisch geneigt oder gekrümmt ausgeführt sein. Die Verringerung der Haft- und Gleitreibung an den Kontaktflächen 41 unterstützt die Leichtgängigkeit bei der rotatorischen Selbstzentrierung deutlich.

Die Haft- und die Gleitreibung der folgenden Kontaktstellen haben einen Einfluss auf die Funktionalität der rotatorischen Selbstzentrierung.
1. Die Kontaktflächen der konischen Indizierung von Aufbauteil und Pfostenteil
2. Die Kontaktflächen zwischen der Verbindungsschraube und dem Aufbauteil. Das bedeutet der Schraubensitz in dem Aufbauteil und der Schraubensitz an dem Kopf der Verbindungsschraube

Die Beeinflussung der Gleit- und Haftreibungseigenschaften der unter 1. und 2. beschriebenen Flächen hat einen entscheidenden Einfluss auf die Funktionalität der rotatorischen Selbstzentrierung.

Das Einsetzen von Aufbauteilen im Patientenmund hat unterschiedliche Schwierigkeitsgrade. Wenn ein Aufbauteil im Frantzahnbereich eingesetzt werden soll ist dieser Bereich meist leicht zugänglich. Muss ein Aufbauteil allerdings im Seitenzahnbereich eingesetzt werden ist die schwieriger, da dieser Bereich schwer zugänglich ist und z.B. durch die Öffnungsfähigkeit des Mundes stärker beeinflusst wird als der Frontzahnbereich. Es kommt häufiger vor dass Aufbauteile eingesetzt werden und sich nicht beim ersten Versuch in der richtigen rotatorischen Position befinden. Auch kann es vorkommen, insbesondere bei konischen Verbindungstypen zwischen dem Aufbauteil und dem Pfostenteil, bei welchen apikal der Konusflächen eine Indizierung angebracht ist, dass die Verbindungsschraube im Pfostenteil greift obwohl die rotatorische Position nicht stimmt und bevor das Rotationsgesperre der Indizierung greift. Das bedeutet dass das Aufbauteil nicht in die Endposition eingebracht wurde (folglich zu hoch sitzt) und trotzdem die Verbindungsschraube montierbar ist. meist merkt der behandelnde Zahnarzt dies erst wenn er den Zahnersatz einprobieren möchte. Ein weiteres Problem ist, dass dabei Bereiche des Aufbauteils oder des Pfostenteil beschädigt werden können. Es wäre somit eine deutliche Optimierung wenn sich das Aufbauteil bezogen auf die rotatorische Ausrichtung selbstständig zentrieren würde sobald die Verbindungsschraube im Pfostenteil greift.

Die folgenden Oberflächenmodifikationen haben eine positive Wirkung auf die Leichtgängigkeit gezeigt. Das einfache Anodisieren (elektrochemische erzeugen einer Oxidschicht), eine Titannitrierung bzw. eine Titannitridbeschichtung, Chromnitrid, eine Anodisierung Typ II und eine DLC (Diamond like Carbon bzw. Diamon like Coating) Beschichtung (mono- und oder polykristalline Kohlenstoff- / Diamantbeschichtung). Mit diesen Verfahren konnte die Reibung zwischen den Verbindungspartner so stark reduziert werden (auch bei der Beschichtung von nicht allen Kontaktflächen), dass bei den verschiedenen Verbindungstypen mit der Verwendung der klinisch und mechanisch sinnvollen Parametern eine rotatorische Selbstzentrierung durch das Anziehen der Verbindungsschraube voll gegeben war.

Von großer Bedeutung ist, dass die Haft- und Reibungsmodifizierende Modifikation bzw. Beschichtung gewebeverträglich ist und zu keinen Reizungen des Hart- und oder Weichgewebes führt.

Den größten Einfluss hatten die Beschichtung der Kontaktflächen zwischen dem Aufbauteil und dem Pfostenteil und die Beschichtung von dem Schraubensitz im Aufbauteil und dem Schraubensitz an der Verbindungsschraube. Es konnte allerdings festgestellt werden, dass schon die Beschichtung von nur einer Fläche einen positiven Einfluss hat. Allein die Beschichtung des Schraubensitzes an der Verbindungsschraube oder der Kontaktfläche des Aufbauteils in Richtung dem Pfostenteil zeigte eine deutliche Verbesserung der Leichtgängigkeit.

Versuche haben ergeben, dass die Reduzierung der Kontaktflächen der vorwiegend konisch gestalteten Funktionsflächen der Indizierung bei internen Verbindungen zwischen dem Pfostenteil und dem Aufbauteil zu einem außerordentlichen Erfolg geführt haben. Interne Verbindungen sind dadurch gekennzeichnet, dass sich in dem Pfostenteil eine Formausnehmung angebracht ist in welche ein am Aufbauteil angeformter Kontaktstift eingreift (Fig. 8 bis Fig. 9). Bei diesen Verbindungstypen werden die Konuswinkel meist deutlich kleiner gestaltet als bei den Verbindungstypen die auf den Figuren 6 und 7 dargestellt sind. Bei den Verbindungstypen die auf den Figuren 8 bis 10 dargestellt sind, ist die Verklemmung- bzw. Hemmungsgefahr vor dem endgültigen Sitz des Aufbauteils im Pfostenteil größer. Die Funktionalität konnte insbesondere bei den ovalen Konusverbindungen optimiert werde.

Vergleicht man nun die die gewünschten Eigenschaften von Indizierungen mit konischen Funktionsflächen und rotatorischer Selbstzentrierung bezogen auf die Insertion mit einem direkt in das Pfostenteil eingreifenden Eindrehwerkzeug und bezogen auf die Güte der Selbstzentrierung fällt auf dass die begünstigenden Gleit- und Haftreibungseigenschaften gegenläufig sind. Günstige Reibungseigenschaften wirken der Insertion mittels eines direkt in das Pfostenteil eingreifenden Eindrehwerkzeuges entgegen.

Der Erfindung liegt die Aufgabe zugrunde, diese Schwierigkeit zu überwinden.

Diese Aufgabe wird erfindungsgemäß gelöst, indem das rotatorische Gesperre mit der Funktion der Indizierung des Aufbauteils im Pfostenteil von der Funktion des Eindrehvorgangs separiert wird in dem unterhalb der Indizierung mit einer rotatorischen Selbstzentrierung eine weiter Indizierung in das Pfostenteil eingebracht wird, welche parallelwandig ist und bei rotatorischer Belastung keine abstoßende Kraft hervorruft. Diese zweite Indizierung wird lediglich zur Insertion des Pfostenteils in den Kieferknochen genutzt. Eventuell auftretende Beschädigungen wirken sich somit auch nicht auf die spätere Funktion zwischen Aufbauteil und Pfostenteil aus. Art und Geometrie des zusätzlichen rotatorischen Gesperres im Pfostenteil können vielfältig sein. In einer besonders vorteilhaften Ausführung ist die Anzahl der nutzbaren Positionen der zur Indizierung genutzten Formausnehmung identisch der möglichen rotatorischen Positionen in dem rotatorischen Gesperre welches für die Insertion genutzt wird. Der Vorteil besteht darin, dass der Behandler während der Insertion an dem Eindrehwerkzeug erkennen kann wo die Positionsmöglichkeiten eines Aufbauteils sind, wenn das Eindrehwerkzeug mit entsprechenden Markierungen versehen ist.

Je geringer die Anzahl der Positionsmöglichkeiten des Aufbauteils auf dem Postenteil, desto wichtiger ist es dass der behandelnde Zahnarzt weiß wie die Indizierung / das Rotationsgesperre im Kieferknochen ausgerichtet ist. Folglich ist es von großer Bedeutung dass die Anzahl der Positionsmöglichkeiten des Indexes mit den zur Pfostenteilachse bzw. Aufbauteilachse geneigten Funktionsflächen, der für die Aufbauteilindexierung dient und des Indexes welcher parallel zur Pfostenteilachse bzw. Aufbauteilachse ausgerichtete Funktionsflächen besitzt welche zum Einschrauben des Pfostenteils fungieren gleich ist. Auf diesem Wege ist es möglich an dem Eindrehinstrument und oder am Eindrehaufbauteil Markierungen anzubringen anhand dessen der Behandler erkennen kann wie die rotatorische Ausrichtung der Indexierung bzw. des rotatorischen Gesperres ist.

In einer besonders bevorzugten Ausführungsform ist ein Dentalimplantat 1 mit einem zur Einbringung in einen Kieferknochen vorgesehenen ersten Implantat-Teil und mit einem diesem zugeordneten, zur Anbringung eines Zahnersatzstücks vorgesehenen zweiten Implantat-Teil vorgesehen, wobei die Implantat-Teile über einen an eines der Implantat-Teile angeformten, in einen im anderen Implantat-Teil vorgesehenen Aufnahmekanal einschiebbaren Verbindungszapfen mechanisch miteinander verbindbar sind, und wobei der Verbindungszapfen und daran angepasst der diesem zugeordnete Aufnahmekanal in einem Indizierungsbereich jeweils eine Anzahl von zur Längsachse des ersten Implantat-Teils geneigten Kontaktflächen aufweisen, wobei mindestens eine der Kontaktflächen an mindestens einem Implantat-Teil mit einer reibungsreduzierenden Beschichtung versehen ist.

Bei diesem Dentalimplantat sind besonders bevorzugt im Indizierungsbereich alle Kontaktflächen der Implantat-Teile mit einer reibungsreduzierenden Beschichtung versehen. In weiterer bevorzugter Ausgestaltung des Dentalimplantats sind dessen Implantat-Teile über eine Verbindungsschraube mechanisch miteinander verbindbar, wobei der Schraubensitz der Verbindungsschraube im jeweiligen Implantat-Teil mit einer reibungsreduzierenden Beschichtung versehen ist.

Erfindungsgemäß weist das Dentalimplantat im Verbindungsbereich einen zweiten Indizierungsbereich in Form eines Rotatoinsgesperres mit im wesentlichen parallel zur Längsachse des Verbindungszapfens ausgerichteten konischen Funktionsflächen auf, wobei beide Indizierungsbereiche für die gleiche Anzahl von Positioniermöglichkeiten ausgelegt sind.

In einer weiteren vorteilhaften Ausgestaltung des Dentalimplantats besitzt die Querschnittsfläche der konischen oder sich verjüngenden ersten Indizierung zwischen den Implantat-Teilen eine ovale Fläche.

### Bezugszeichenliste

- 1: Pfostenteil / Dentalimplantat
- 11: Außengewinde auf dem Pfostenteil 1
- 12: Innengewinde im Pfostenteil 1
- 13: Formausnehmung im Pfostenteil 1
- 15: Dachfläche 1 auf dem Pfostenteil 1
- 155: Dachfläche 2 auf dem Pfostenteil 1
- 16: Verzahnungselement / Verzahnungsfläche auf dem Pfostenteil 1
- 17: Indizierende / sperrende Funktionsfläche in der Formaufnehmung 13 von dem Pfostenteil 1
- 2: Aufbauteil
- 21: Schraubenkanal im Aufbauteil 2
- 22: Anschlussstück am Aufbauteil 2 zur Befestigung eines Zahnersatzstückes
- 23: Kontaktstift am Aufbauteil 2
- 24: Schleimhautdurchtrittsbereich des Aufbauteils 2
- 25: Dachfläche 1 am Aufbauteil 2
- 255: Dachfläche 2 am Aufbauteil 2
- 26: Verzahnungselement / Verzahnungsfläche am Aufbauteil 2
- 27: Indizierende / sperrende Funktionsfläche am Aufbauteil 2
- 3: Verbindungsschraube zur Fixierung des Aufbauteils 2 auf dem Pfostenteil 1
- 4: Ausschnitt / Ausschnittsvergrößerung von dem Schraubensitz der Schraube 3 in dem Aufbauteil 2
- 41: Schraubensitz / Kontaktfläche zwischen der Verbindungsschraube 3 und dem Aufbauteil 2
- AA: Aufbauteilachse
- PA: Pfostenteilachse

## Patentansprüche

1. Dentalimplantat mit einem zur Einbringung in einen Kieferknochen vorgesehenen ersten Implantat-Teil (1) und mit einem diesem zugeordneten, zur Anbringung eines Zahnersatzstücks vorgesehenen zweiten Implantat-Teil (2), wobei die Implantat-Teile (1,2) über einen an eines der Implantat-Teile angeformten, in einen im anderen Implantat-Teil vorgesehenen Aufnahmekanal (13) einschiebbaren Verbindungszapfen (23) mechanisch miteinander verbindbar sind, bei dem der Verbindungszapfen (23) und daran angepasst der diesem zugeordnete Aufnahmekanal (13) in einem ersten Indizierungsbereich jeweils eine Mehrzahl von zur Längsachse des ersten Implantat-Teils (1) geneigten Kontaktflächen (27) aufweisen, wobei das erste, zur Einbringung in den Kieferknochen vorgesehene Implantat-Teil (1) im Verbindungsbereich einen zweiten Indizierungsbereich in Form eines Rotationsgeperres mit in Bezug zur Längsachse des Verbindungszapfens (23) parallelen Funktionsflächen aufweist, **gekennzeichnet dadurch, dass** beide Indizierungsbereiche für die gleiche Anzahl von Positioniermöglichkeiten ausgelegt sind.

2. Dentalimplantat mit einem zur Einbringung in einen Kieferknochen vorgesehenen ersten Implantat-Teil (1) und mit einem diesem zugeordneten, zur Anbringung eines Zahnersatzstücks vorgesehenen zweiten Implantat-Teil (2), wobei die Implantat-Teile (1,2) über einen an eines der Implantat-Teile angeformten, in einen im anderen Implantat-Teil vorgesehenen Aufnahmekanal (13) einschiebbaren Verbindungszapfen (23) mechanisch miteinander verbindbar sind, bei dem der Verbindungszapfen (23) und daran angepasst der diesem zugeordnete Aufnahmekanal (13) in einem ersten Indizierungsbereich eine Konusverbindung mit nicht rundem Querschnitt bilden, wobei das erste, zur Einbringung in den Kieferknochen vorgesehene Implantat-Teil (1) im Verbindungsbereich einen zweiten Indizierungsbereich in Form eines Rotationsgeperres mit in Bezug zur Längsachse des Verbindungszapfens (23) parallelen Funktionsflächen aufweist, **gekennzeichnet dadurch, dass** beide Indizierungsbereiche für die gleiche Anzahl von Positioniermöglichkeiten ausgelegt sind.

3. Dentalimplantat nach Anspruch 2, bei dem der Verbindungszapfen (23) und daran angepasst der diesem zugeordnete Aufnahmekanal (13) im ersten Indizierungsbereich jeweils eine zur Längsachse des ersten Implantat-Teils (1) geneigte, im Querschnitt ovale Kontaktfläche aufweisen.

4. Dentalimplantat nach einem der Ansprüche 1 bis 3, bei dem im ersten Indizierungsbereich einige oder alle der Kontaktflächen der Implantat-Teile (1,2) mit einer reibungsreduzierenden Beschichtung versehen sind.

5. Dentalimplantat nach einem der Ansprüche 1 bis 3, dessen Implantat-Teile (1,2) über eine Verbindungsschraube (3) mechanisch miteinander verbindbar sind, wobei der Schraubensitz der Verbindungsschraube (3) im jeweiligen Implantat-Teil (1,2) mit einer reibungsreduzierenden Beschichtung versehen ist.

## Claims

1. A dental implant with a first implant part (1) provided for the introduction into a jaw bone and with a second implant part (2) which is associated with said first implant part and provided for the attachment of a dental prosthesis piece, wherein the implant parts (1, 2) can be mechanically connected to one another via a connecting pin (23) which is formed on one of the implant parts and which can be inserted into a receiving channel (13) provided in the other implant part, wherein the connecting pin (23) and, adapted thereto, the receiving channel (13) associated with said connecting pin, in a first indexing region, in each case comprise a plurality of contact surfaces (27) inclined toward the longitudinal axis of the first implant part (1), wherein the first implant part (1) provided for the introduction into the jaw bone, in the connection region, comprises a second indexing region in the form of a rotation locking mechanism with functional surfaces which are parallel with respect to the longitudinal axis of the connecting pin (23), **characterized in that** the two indexing regions are designed for the same number of positioning possibilities.

2. A dental implant with a first implant part (1) provided for the introduction into a jaw bone and with a second implant part (2) which is associated with said first implant part and provided for the attachment of a dental prosthesis piece, wherein the implant parts (1, 2) can be mechanically connected to one another via a connecting pin (23) which is formed on one of the implant parts and which can be inserted into a receiving channel (13) provided in the other implant part, wherein the connecting pin (23) and, adapted thereto, the receiving channel (13) associated with said connecting pin, in a first indexing region, form a conical connection with non-round cross section, wherein the first implant part (1) which is provided for the introduction into the jaw bone, in the connection region, comprises a second indexing region in the form of a rotation locking mechanism with functional surfaces which are parallel with respect to the longitudinal axis of the connecting pin (23), **characterized in that** the two indexing regions are designed for the same number of positioning possibilities.

3. The dental implant according to Claim 2, wherein the connecting pin (23) and, adapted thereto, the receiving channel (13) associated with said connecting pin, in the first indexing region, comprise in each case a contact surface with oval cross section, which is inclined toward the longitudinal axis of the first implant part (1).

4. The dental implant according to any one of Claims 1 to 3, wherein, in the first indexing region, some or all of the contact surfaces of the implant parts (1, 2) are provided with a friction-reducing coating.

5. The dental implant according to any one of Claims 1 to 3, the implant parts (1, 2) of which can be mechanically connected to one another via a connection screw (3), wherein the screw seat of the connection screw (3) in the respective implant part (1, 2) is provided with a friction-reducing coating.

## Revendications

1. Implant dentaire avec une première partie d'implant (1) prévue pour l'introduction dans un os maxillaire et avec une deuxième partie d'implant (2) associée à celle-ci, prévue pour le montage d'une pièce de prothèse dentaire, dans lequel les parties d'implant (1, 2) peuvent être reliées l'une à l'autre mécaniquement par le biais d'un tenon de liaison (23) moulé au niveau d'une des parties d'implant, pouvant être introduit dans un canal de réception (13) prévu dans l'autre partie d'implant, dans lequel le tenon de liaison (23) et adapté à celui-ci le canal de réception (13) associé à celui-ci présentent dans une première zone d'indexation respectivement une pluralité de surfaces de contact (27) inclinées par rapport à l'axe longitudinal de la première partie d'implant (1), dans lequel la première partie d'implant (1) prévue pour l'introduction dans l'os maxillaire présente dans la zone de liaison une deuxième zone d'indexation sous la forme d'un blocage de rotation avec des surfaces fonctionnelles parallèles par rapport à l'axe longitudinal du tenon de liaison (23), **caractérisé en ce que** les deux zones d'indexation sont conçues pour le même nombre de possibilités de positionnement.

2. Implant dentaire avec une première partie d'implant (1) prévue pour l'introduction dans un os maxillaire et avec une deuxième partie d'implant (2) associée à celle-ci, prévue pour le montage d'une pièce de prothèse dentaire, dans lequel les parties d'implant (1, 2) peuvent être reliées l'une à l'autre mécaniquement par le biais d'un tenon de liaison (23) moulé au niveau d'une des parties d'implant, pouvant être introduit dans un canal de réception (13) prévu dans l'autre partie d'implant, dans lequel le tenon de liaison (23) et adapté à celui-ci le canal de réception (13) associé à celui-ci forment dans une première zone d'indexation une liaison en cône avec section transversale non ronde, dans lequel la première partie d'implant (1) prévue pour l'introduction dans l'os maxillaire présente dans la zone de liaison une deuxième zone d'indexation sous la forme d'un blocage de rotation avec des surfaces fonctionnelles parallèles par rapport à l'axe longitudinal du tenon de liaison (23), **caractérisé en ce que** les deux zones d'indexation sont conçues pour le même nombre de possibilités de positionnement.

3. Implant dentaire selon la revendication 2, dans lequel le tenon de liaison (23) et adapté à celui-ci le canal de réception (13) associé à celui-ci présentent dans la première zone d'indexation respectivement une surface de contact à section transversale ovale, inclinée par rapport à l'axe longitudinal de la première partie d'implant (1).

4. Implant dentaire selon l'une quelconque des revendications 1 à 3, dans lequel dans la première zone d'indexation quelques-unes ou toutes les surfaces de contact des parties d'implant (1, 2) sont dotées d'un revêtement réduisant le frottement.

5. Implant dentaire selon l'une quelconque des revendications 1 à 3, dont les parties d'implant (1, 2) peuvent être reliées l'une à l'autre mécaniquement par le biais d'une vis de liaison (3), dans lequel le siège de vis de la vis de liaison (3) est doté dans la partie d'implant (1, 2) respective d'un revêtement réduisant le frottement.
